# EUROPÄISCHE PATENTSCHRIFT

(11) **EP 1 206 656 B1**
(45) Veröffentlichungstag und Bekanntmachung des Hinweises auf die Patenterteilung: **05.01.2005**
(21) Anmeldenummer: 00956394.1
(22) Anmeldetag: 04.08.2000
(51) Int. Cl.: F16J 15/34

(54) **CO 2 - KOMPRESSOR**
CO 2 COMPRESSOR
COMPRESSEUR AU CO 2

(30) Priorität: 06.08.1999 DE 19937250
(43) Veröffentlichungstag der Anmeldung: 22.05.2002
(73) Patentinhaber: Luk Fahrzeug-Hydraulik GmbH & Co. KG, 61352 Bad Homburg (DE)
(72) Erfinder: HINRICHS, Jan, D-61381 Friedrichsdorf (DE); KUHN, Peter, D-69469 Weinheim (DE); OBRIST, Frank, A-6850 Dornbirn (AT)
(74) Vertreter: Gleiss, Alf-Olav, Dr.jur. Dipl.-Ing.
(86) Internationale Anmeldenummer: PCT/EP2000/007569
(87) Internationale Veröffentlichungsnummer: WO 2001/011276

(56) Entgegenhaltungen:
- EP-A- 1 024 319
- DE-A- 4 132 164
- DE-A- 19 712 480
- US-A- 5 658 127

## Beschreibung

Die Erfindung betrifft einen CO₂-Kompressor für eine Klimaanlage eines Kraftfahrzeugs mit einer Gleitringdichtung gemäß Oberbegriff des Anspruchs 1.

CO₂-Kompressoren der hier angesprochenen Art sind bekannt.

In DE-A-197 12 480 und US-A-5,658,127 sind CO₂-Kompressoren beschrieben, die eine Schmiermitteleinrichtung aufweisen, bei der die Schmiermittelströmung durch Fliehkraft zugeführt wird. Die Gleitringdichtungen weisen einen Gleitring und eine diesem zugeordnete Mitnehmereinrichtung auf. Elemente der Mitnehmereinrichtung sind Federeinrichtungen, die wiederum Elemente umfassen, die mit einer Vorspannung beaufschlagt sind.

Nachteilig ist, daß sich häufig ein hoher Verschleiß der einen Gleit- und einen Gegenring umfassenden Gleitringdichtung einstellt, der insbesondere darauf beruht, daß der mit einer Federkraft beaufschlagte Gleitring und der Gegenring mit einer relativ hohen Kraft gegeneinander angepreßt werden müssen, damit sich im Bereich der zwischen dem Gegen- und Gleitring liegenden Dichtfläche ausreichende Anpreßkräfte einstellen und ein CO₂-Austritt verhindert werden kann. In der Regel ist bei einer Gleitringdichtung der Gegenring feststehend ausgebildet, während der Gleitring mit der Antriebswelle des Kompressors rotiert und mit einer Federkraft beaufschlagt ist. Es sind jedoch auch Ausgestaltungen bekannt, bei denen der Gleitring feststeht und der Gegenring rotiert.

Aufgabe der Erfindung ist es, einen CO₂-Kompressor zur Verfügung zu stellen, der sich durch einen reduzierten Verschleiß auszeichnet.

Zur Lösung dieser Aufgabe wird ein CO₂-Kompressor vorgeschlagen, der die in Anspruch 1 genannten Merkmale aufweist. Er zeichnet sich dadurch aus, daß eine Schmiereinrichtung vorgesehen ist, die eine Schmiermittelströmung erzeugt. Diese wird durch Fliehkräfte aufgebaut.

Ferner weist die Gleitringdichtung eine Mitnehmereinrichtung auf, die den mit der Antriebswelle rotierenden Gleitring erfasst und in Rotation versetzt. Trotz der hohen Anpresskräfte, die bei einem CO₂-Kompressor erforderlich sind, wird damit eine synchrone Rotation des Gleitrings mit der Antriebswelle sichergestellt, wodurch im Bereich zwischen Antriebswelle und Gleitring insofern klein Verschleiß entsteht. Die Mitnehmereinrichtung weist ihrerseits eine Federeinrichtung auf, die eine Zunge mit einer Vorspannungskraft beaufschlagt. Eine derartige Ausgestaltung vereinfacht die Montage der Gleitringdichtung sehr, da die Zunge der Mitnehmereinrichtung quasi selbständig, spätestens nach einer Umdrehung der Mitnehmereinrichtung einrastet. Beispielsweise kann. die Zunge in einen Flansch eingreifen der von der Antriebswelle in Rotation versetzt wird.

Insgesamt ist es damit auf einfache Weise möglich, im Bereich der Gleitringdichtung eine Schmierung sicherzustellen. Insbesondere kann auf aufwendige Einrichtungen zur Erzeugung der Schmiermittelströmung verzichtet werden.

Bevorzugt wird ein Ausführungsbeispiel des CO₂-Kompressors, das sich durch ein im Betrieb des CO₂-Kompressors rotierendes, als Fliehkraftpumpe wirkendes Bauteil auszeichnet, das mit dem Schmiermittel so zusammenwirkt, daß durch im Betrieb des CO₂-Kompressors gegebene Rotation des Bauteils das Schmiermittel so verwirbelt wird, daß Fliehkräfte eine von der Drehachse des Flansches nach außen fließende Strömung aufbauen. Bei Rotation des Bauteils wird das Schmiermittel durch die Fliehkräfte und Verwirbelungen also nach außen verlagert und gelangt somit an die Innenseite des CO₂-Kompressors beziehungsweise dessen Gehäuses, so daß ein Flüssigkeitsring aufgebaut wird, der einen von der Drehzahl des Bauteils und der Flüssigkeitsmenge abhängigen, leichten Überdruck zeigt. Dieser Überdruck im Flüssigkeitsring bewirkt, daß ein Öl-CO₂-Gemisch von außen über geeignete Öffnungen im Inneren des CO₂-Kompressors geführt wird, so daß eine Schmiermittelströmung entsteht, die zur Gleitringdichtung geführt wird. Es wird deutlich, daß ein derartiger CO₂-Kompressor einfach aufgebaut ist und sich durch eine effektive Schmiermittelströmung auszeichnet. Diese kann im übrigen auch so geführt werden, daß Lagereinrichtungen des CO₂-Kompressors mitversorgt werden.

Bevorzugt wird überdies ein Ausführungsbeispiel des CO₂-Kompressors, das sich dadurch auszeichnet, daß das rotierbare Bauteil ein innerhalb des CO₂-Kompressors vorgesehener Flansch ist. Dieser dient beispielsweise dem Antrieb einer Kompressoreinheit des CO₂-Kompressors und wird daher auch als Mitnehmerflansch bezeichnet. Die Kompressoreinheit kann auf übliche Weise ausgestaltet sein, beispielsweise als Axialkolbenpumpe. Der Flansch ist im Inneren des CO₂-Kompressors angeordnet und wirkt, wie oben beschrieben, so mit dem Schmiermittel zusammen, daß durch den Betrieb des CO₂-Kompressors gegebene Rotation des Flansches durch Fliehkräfte eine von der Drehachse des Flansches nach außen wirkende Strömung aufgebaut wird, wobei auch von dem Flansch verursachte Verwirbelungen auf das Schmiermittel wirken, die ebenfalls zur Strömung beitragen. Bei Rotation des Flansches wird also der erwähnte Flüssigkeitsring aufgebaut, welcher letztlich die Schmiermittelströmung bewirkt.

Bevorzugt wird ein Ausführungsbeispiel des CO₂-Kompressors, bei dem die Mitnehmereinrichtung mit einem von der Antriebswelle des CO₂-Kompressors angetriebenen Flansch drehfest gekoppelt ist.

Bevorzugt wird außerdem ein Ausführungsbeispiel des CO₂-Kompressors, bei dem die Mitnehmereinrichtung mindestens einen, mit dem Gleitring zusammenwirkenden Mitnehmerarm aufweist.

Bevorzugt wird außerdem ein Ausführungsbeispiel des CO₂-Kompressors, bei dem die Mitnehmereinrichtung aus einem flachen Material, vorzugsweise aus Blech herstellbar ist.

Außerdem wird ein Ausführungsbeispiel eines CO₂-Kompressors bevorzugt, bei dem die Mitnehmereinrichtung in einem Stanz-Biegeverfahren, damit auf einfache, kostengünstige Weise, herstellbar ist.

Bei einem weiteren bevorzugten Ausführungsbeispiel des CO₂-Kompressors ist die Mitnehmereinrichtung aus einem Stück hergestellt.

Ein weiteres bevorzugtes Ausführungsbeispiel des CO₂-Kompressors zeichnet sich dadurch aus, daß die Gleitringdichtung einen feststehenden, mit einem Gehäuseteil des CO₂-Kompressors gekoppelten Gegenring und eine die Kopplung bewirkende Kopplungseinrichtung aufweist. Damit kann eine starre Kopplung zwischen Gehäuse und Gegenring realisiert werden, so daß Reibungskräfte zwischen Gehäuse und Gegenring ausgeschlossen sind.

Bevorzugt wird außerdem ein Ausführungsbeispiel des CO₂-Kompressors, das sich dadurch auszeichnet, daß die Kopplungseinrichtung ein Zweiflach und/oder mindestens einen Kopplungsstift umfaßt.

Weiterhin wird ein Ausführungsbeispiel des CO₂-Kompressors bevorzugt, das sich dadurch auszeichnet, daß die Gleitringdichtung eine als Gehäuse ausgebildete Hülse aufweist, die es ermöglicht, die Gleitringdichtung als komplette Montageeinrichtung in den CO₂-Kompressor einzubauen.

Außerdem wird ein Ausführungsbeispiel des CO₂-Kompressors bevorzugt, bei dem eine der Antriebswelle zugeordnete Lagereinrichtung vorgesehen ist, die Lagereinrichtung ein außerhalb der CO₂-Atmosphäre angeordnetes Lager aufweist, das damit den schädlichen Einflüssen dieses Mediums entzogen ist.

Außerdem wird ein Ausführungsbeispiel des CO₂-Kompressors bevorzugt, das sich dadurch auszeichnet, daß das Lager abgedichtet und fettgeschmiert ist. Die Abdichtung führt zu einem zusätzlichen Schutz des Lagers und dazu, daß das Schmiermittel von dem CO₂ nicht beeinträchtigt werden kann.

Weiterhin wird ein Ausführungsbeispiel des CO₂-Kompressors bevorzugt, bei dem zwischen Lagereinrichtung und Dichteinrichtung ein Entlastungsraum vorgesehen ist. Dieser dient der Entkopplung des Lagers von der CO₂-Atmosphäre.

Schließlich wird ein Ausführungsbeispiel des CO₂-Kompressors bevorzugt, bei dem der Entlastungsraum einen Entlastungskanal aufweist. Dieser stellt vorzugsweise eine Verbindung zwischen dem Entlastungsraum und der Atmosphäre her, so daß dort eindringendes CO₂ ohne weiteres austreten kann und ein Druckaufbau vermieden wird.

Die Erfindung wird im folgenden anhand der Zeichnung näher erläutert. Es zeigen:
- Figur 1: einen Ausschnitt eines CO₂-Kompressors im Längsschnitt;
- Figur 1a: ein Detail aus Figur 1;
- Figur 2: eine perspektivische Ansicht eines Gegenrings einer Gleitringdichtung;
- Figur 3: eine perspektivische Ansicht eines Gleitrings einer Gleitringdichtung und
- Figur 4: eine perspektivische Ansicht einer Mitnehmereinrichtung.

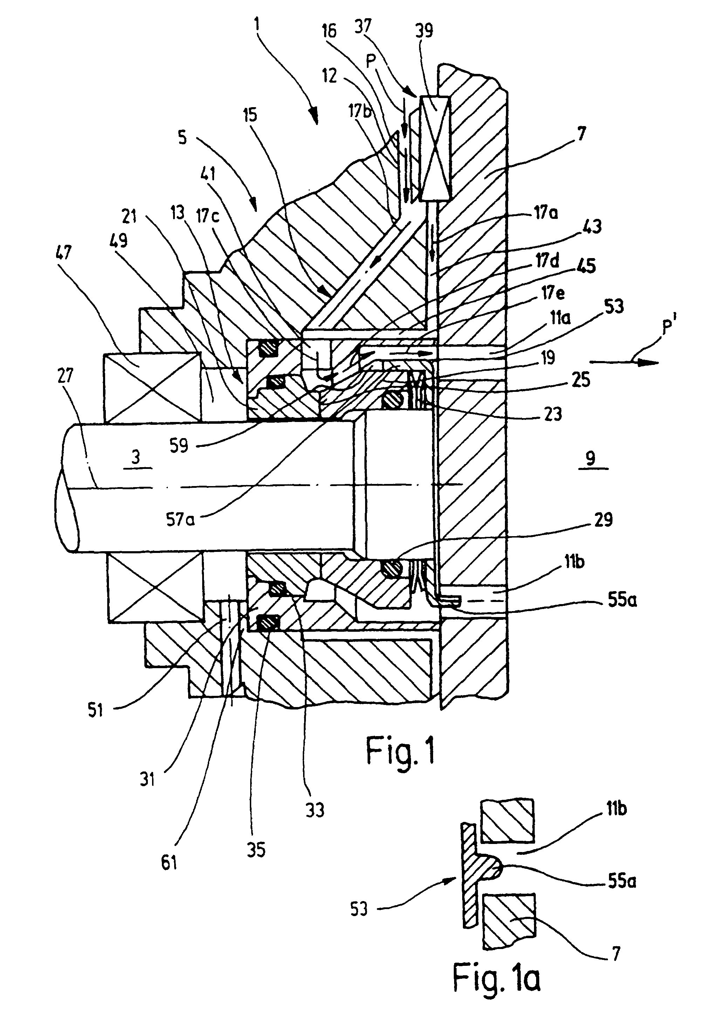

Die Darstellung gemäß Figur 1 gibt im Längsschnitt einen Teil eines CO₂-Kompressors 1 wieder, der für eine Klimaanlage eines Kraftfahrzeugs eingesetzt wird und eine Antriebswelle 3 umfaßt. Diese wird auf übliche Weise, beispielsweise über eine Riemenscheibe von der Brennkraftmaschine des Kraftfahrzeugs in Rotation versetzt. Die Antriebswelle ist hier lediglich abschnittsweise dargestellt. Die Riemenscheibe wird auf das linke, hier nicht dargestellte Ende der Antriebswelle 3 aufgesetzt und auf bekannte Weise drehfest mit dieser verbunden. Die Antriebswelle ragt in ein Gehäuse 5 des CO₂-Kompressors 1 und treibt über einen Flansch 7, mit dem sie drehfest verbunden ist, eine in einem Triebraum 9 untergebrachte Fördereinrichtung an, die beispielsweise als Axialkolbenmaschine ausgebildet sein kann. Einzelheiten der Fördereinrichtung sind hier nicht wiedergegeben. Sie sind dem Fachmann bekannt.

In dem Triebraum 9 befindet sich im Betrieb des CO₂-Kompressors 1 CO₂ unter einem hohen Überdruck. Dieser wirkt über Bohrungen 11a und 11b, die den Flansch 7 durchdringen, bis zu einer Dichtungseinrichtung 13, die den Triebraum 9 gegenüber der Umgebung dichtend verschließt.

Die Dichtungseinrichtung 13 weist eine Gleitringdichtung auf, die einen hier mit der Antriebswelle 3 rotierenden und mit einer Federkraft beaufschlagten Gleitring 19 und einen feststehenden, mit einem Gehäuseteil des CO₂-Kompressors 1 gekoppelten Gegenring 21 umfaßt sowie eine die Kopplung zwischen Gegenring 21 und Gehäuseteil bewirkende Kopplungseinrichtung.

Der Dichteinrichtung 13 ist eine Schmiereinrichtung 15 zugeordnet, die eine durch Pfeile 17a bis 17e angedeutete Schmiermittelströmung erzeugt.

Die Dichtungseinrichtung 13 ist als Gleitringdichtung ausgebildet, die einen synchron mit der Antriebswelle 3 in Rotation versetzbaren Gleitring 19 und einen mit dem Gehäuse 5 feststehenden Gegenring 21 umfaßt. Der Gleitring 19 und der Gegenring 21 werden durch ein Federpaket 23 gegeneinandergepreßt. Sie berühren sich im Bereich einer als Dichtfläche dienenden Gleitfläche 25, auf der die Drehachse 27 der Antriebswelle senkrecht steht. Die Gleitfläche 25 ist eine konzentrisch um die Antriebswelle 3 herum verlaufende Ringfläche. Diese dichtet letztlich den Triebraum 9 gegenüber der Umgebung ab. Es ist erforderlich, den Gleitring 19 mit einer hohen Kraft gegen den Gegenring 21 anzupressen, weil die CO₂-Moleküle relativ klein sind und daher bei den hohen im Betrieb des CO₂-Kompressors 1 auftretenden Druckwerten leicht Dichtflächen überwinden.

Der Gleitring 19 ist gegenüber der Umfangsfläche der Antriebswelle mittels einer geeigneten Dichtung, hier mittels eines O-Rings 29 abgedichtet.

Die Dichtungseinrichtung 13 umfaßt bei dem hier dargestellten Ausführungsbeispiel ein auch als Cartridge bezeichnete Hülse 31, die den Gleitring 19 und den Gegenring 21 umgibt und die drehfest mit dem Gegenring 21 verbunden ist. Der Gegenring 21 ist über eine geeignete Dichtung, hier über einen zweiten O-Ring 33 gegenüber der Hülse 31 abgedichtet, die ihrerseits über einen dritten O-Ring 35 gegenüber dem Gehäuse 5 abgedichtet wird.

Insgesamt ergibt sich hiermit, daß der Triebraum 9 über den ersten O-Ring 29 gegenüber der Antriebswelle 3 und über die als Dichtfläche wirkende Gleitfläche 25, den zweiten O-Ring 33 und den dritten O-Ring 35 gegenüber der Atmosphäre abgedichtet wird.

Die Schmiereinrichtung 15 ist so ausgebildet, daß aus dem Triebraum 9 CO₂ mit Öl als Schmiermittelströmung am Gleitring 19 und am Gegenring 21 vorbeiströmt und dabei die Gleitfläche 25 schmiert.

Der Flansch 7 stützt sich hier an dem Gehäuse 5 über eine erste Lagereinrichtung 37, die beispielsweise ein Wälzlager 39 umfaßt, ab. Der Flansch 7 kann sich daher gegenüber dem Gehäuse 5 drehen.

Die erste Lagereinrichtung 37 liegt in dem Bereich der vom Triebraum 9 ausgehenden Schmiermittelströmung.

Anhand von Figur 1 soll die Schmiermittelströmung näher erläutert werden.

Ausgangspunkt für die von Fliehkräften verursachte Schmiermittelströmung ist ein im Betrieb des CO₂-Kompressors 1 in Rotation versetzbares Bauteil. Bei dem in Figur 1 dargestellten Ausführungsbeispiel handelt es sich hier um den Flansch 7. Dieser begrenzt den Triebraum 9, in dem eine geeignete Kompressoreinheit, beispielsweise eine Axialkolbenpumpe, untergebracht ist und die über den Flansch 7, der daher auch als Mitnehmerflansch bezeichnet wird, angetrieben wird. Der Flansch 7 wirkt mit dem im Triebraum 9 vorhandenen Schmiermittel, beispielsweise einem Öl, zusammen, welches gemeinsam mit dem im Triebraum 9 vorhandenen CO₂ bei einer Rotation des Flansches 7 nach außen geschleudert wird und quasi einen Flüssigkeitsring auf der Innenfläche bildet, die den Triebraum 9 umgibt. Durch die Fliehkräfte wird das Schmiermittel so nach außen geschleudert, daß in dem Flüssigkeitsring ein Überdruck aufgebaut wird. Dieser bewirkt, daß das Schmiermittel -gegebenenfalls gemeinsam mit dem CO₂- zu der Dichtungseinrichtung 13 geführt wird.

Die in Figur 1 dargestellte Schmiereinrichtung, die also das rotierende Bauteil beziehungsweise hier den Flansch 7 umfaßt, über den der Flüssigkeitsring aufgebaut wird, schließt mindestens einen vom Flüssigkeitsring in Richtung zur Drehachse 27 verlaufenden Kanal, beispielsweise eine Bohrung 12 ein, über die das unter einem Überdruck stehende Medium aus dem Flüssigkeitsring in Richtung zur Dichtungseinrichtung 13 gedrückt wird. Durch einen Pfeil 16 wird die in der Bohrung 12 verlaufende Schmiermittelströmung angedeutet.

Das innerhalb der Bohrung 12 nach innen strömende Medium kann zwei Teilströme bilden, die durch die Pfeile 17a und 17b angedeutet sind. Die Schmiermittelströmung gelangt im weiteren Verlauf zur Hülse 31. Eine Teilströmung verläuft im Inneren der Hülse, was durch die Pfeile 17c, 17d und 17e angedeutet ist. Dieser Teilstrom führt am Gegenring 21 und am Gleitring 19 vorbei, wobei insbesondere die Gleitfläche 25 geschmiert wird. Der Gleitring 19 und der Gegenring 21 umgeben, ebenso wie die Hülse 31, die Antriebswelle 3. Ebenso verläuft die Schmiermittelströmung ringförmig um den Gleitring 19 und den Gegenring 21 herum, so daß die Dichtfläche 25 vollständig geschmiert aber auch gekühlt wird.

Der im Inneren der Hülse 31 verlaufende Schmiermittelstrom tritt durch die Bohrungen 11a und 11b in den Triebraum 9 aus. Damit schließt sich der Kreislauf: Das hierher gelangende Schmiermittel kann nun wiederum durch das rotierende Bauteil, hier durch den Flansch 7, nach außen geschleudert werden und zu dem Flüssigkeitsring gelangen, der das Schmiermittel unter einem Überdruck durch die Hülse 31 preßt.

Die Hülse 31 liegt dichtend an dem sich gegenüber der Hülse 31 drehenden Flansch 7 an. Die Bohrungen 11a und 11b sind in einem solchen Abstand zur Drehachse 27 angeordnet, daß sie eine Fluidverbindung zwischen der als Gehäuse für die Gleitringdichtung wirkenden Hülse 31 und dem Triebraum 9 bilden und sicherstellen, daß eine geschlossene Schmiermittelströmung entsteht und eine sichere Schmierung der als Dichtung wirkenden Gleitfläche 25 gewährleistet ist.

Aus Figur 1 ist erkennbar, daß in einem in axialer Richtung gemessenen Abstand zum Flansch 7 ein Einlaß 41 in der Hülse 31 vorgesehen ist, über den das CO₂-Öl-Gemisch in das Innere der Hülse 31 eintreten kann. Die Schmiermittelströmung ist so geführt, daß sie, wie durch den Pfeil 17c angedeutet, unmittelbar auf die zu schmierende Gleitfläche 25 auftrifft und hierbei im wesentlichen radial von außen nach innen in Richtung auf die Drehachse 27 verläuft. Es erfolgt dann eine Umlenkung, so daß die Schmiermittelströmung mehr oder weniger parallel zur Mittelachse 27 durch die Hülse 31 verläuft, was der Pfeil 17e zeigt. Sie tritt dann, wie gesagt, über die Bohrungen 11a, 11b in den Triebraum 9 aus. Bei dem hier gewählten Verlauf der Schmiermittelströmung, die an der Gleitringdichtung entlangströmt, kann auch eine Kühlung der Dichtungseinrichtung 13 gewährleistet werden.

Bei dem in Figur 1 dargestellten Ausführungsbeispiel verläuft die Schmiermittelströmung entsprechend dem Pfeil 17b innerhalb der Bohrung 12 letztlich bis zur Gleitfläche 25. Innerhalb der Bohrung 12 verläuft die Strömung etwa senkrecht zur Drehachse 27. Es schließt sich dann ein Strömungsbereich an, der durch den Pfeil 17b angedeutet ist. Hier verläuft die Schmiermittelströmung von der ersten Lagereinrichtung 37 zum Einlaß 41 der Hülse 31 unter einem Winkel, der hier etwa 45° beträgt. In Figur 1 ist ein Spalt 43 wiedergegeben, der zwischen dem Gehäuse 5 und dem Flansch 7 ausgebildet ist, und innerhalb dessen ein Teil der Schmiermittelströmung verlaufen kann. Dies ist durch den Pfeil 17a angedeutet. Die hier gegebene Strömung verläuft im wesentlichen radial nach innen in Richtung auf die Drehachse 27. Der Spalt 43 steht in Fluidverbindung mit einem die Hülse 31 umgebenden Ringspalt 45, in dem sich die im Spalt 43 gegebene Teilströmung fortsetzt und außen um die Hülse 31 herum verläuft, bis auch sie den Einlaß 41 erreicht. Diese Teilströmung ist nicht zwingend erforderlich. Sie trägt jedoch zur zusätzlichen Kühlung der Hülse 31 bei.

Durch einen Pfeil P wird angedeutet, daß die Schmiermittelströmung von einem Bereich radial außerhalb der Lagereinrichtung 37 ausgeht, nämlich von dem oben angesprochenen Flüssigkeitsring und dann nach innen zur Dichtungseinrichtung 13 verläuft. Schließlich tritt die Schmiermittelströmung über die Bohrungen 11a, 11b durch den Flansch 7 wieder in den Triebraum 9 ein, was durch den Pfeil P' angedeutet ist.

Es ist ohne weiteres ersichtlich, daß für das Grundprinzip der hier dargestellten Schmiermittelströmung die Anzahl der Bohrungen 12 nicht unmittelbar von Bedeutung ist. Vorzugsweise werden, um eine gleichmäßige Strömung zu gewährleisten, etwa vier Bohrungen vorgesehen, durch die das Schmiermittel von dem Flüssigkeitsring nach innen zur Dichtungseinrichtung 13 gelangen kann.

Figur 1 zeigt, daß bei dem hier dargestellten Ausführungsbeispiel die Antriebswelle 3 gegenüber dem Gehäuse 5 über eine zweite Lagereinrichtung 47 abgestützt wird. Diese ist in einem Abstand zur Dichtungseinrichtung 13 außerhalb der CO₂-Atmosphäre angeordnet, so daß hier ein zwischenliegender Entlastungsraum 49 gebildet wird, der die zweite Lagereinrichtung 47 und die Dichtungseinrichtung trennt. Der Entlastungsraum 49 dient dazu, daß aus der Dichtungseinrichtung 13 austretendes CO₂ beziehungsweise CO₂-Ölgemisch nicht unmittelbar, insbesondere nicht unter hohem Druck, auf die zweite Lagereinrichtung 47 trifft und diese beeinträchtigt. Eine in der zweiten Lagereinrichtung 47 vorgesehene Fettschmierung hat dadurch eine erhöhte Lebensdauer. Diese kann noch dadurch gesteigert werden, daß der Entlastungsraum über einen das Gehäuse 5 durchdringenden Entlastungskanal 51 mit einem unter einem geringeren Druck stehenden Bereich, insbesondere der Umgebung, hier mit der Atmosphäre, verbunden wird, so daß ein zu großer Druckaufbau im Entlastungsraum 49 sicher vermieden wird. Die Lebensdauer der zweiten Lagereinrichtung 47 kann auch noch dadurch erhöht werden, daß diese abgedichtet ist.

Die zweite Lagereinrichtung 47 kann nahe der hier nicht dargestellten, mit der Antriebswelle 3 drehfest gekoppelten Riemenscheibe angeordnet werden, vorzugsweise unmittelbar unter der Riemenscheibe plaziert werden. Dadurch ergibt sich eine sehr geringe Wellendurchbiegung beziehungsweise Durchbiegung der Antriebswelle 3, so daß eine Belastung der Wellendichtung beziehungsweise Dichtungseinrichtung 13 auf ein Minimum reduziert wird. Insbesondere wird vermieden, daß der Gegenring 21 und der Gleitring 19 im Bereich der als Dichtfläche dienenden Gleitfläche 25 gegeneinander verkantet werden, wodurch hohe Reibkräfte und Verschleißerscheinungen auftreten.

Es ist ohne weiteres ersichtlich, daß mit der zweiten Lagereinrichtung 47, die hier lediglich durch ein technisches Symbol angedeutet ist, eine fliegende Lagerung der Antriebswelle 3 realisierbar ist, bei der alle Lagereinrichtungen der Antriebswelle auf einer Seite des Gehäuses 5 angeordnet sind, nämlich auf der Seite der Riemenscheibe.

Oben wurde bereits ausgeführt, daß die den Gleitring 19 und den Gegenring 21 umfassende Gleitringdichtung der Dichtungseinrichtung 13 im Bereich der Gleitfläche 25 den Durchtritt von CO₂ verhindern soll. Daher werden der Gleitring 19 und der Gegenring 21 mit hohen Kräften gegeneinandergedrückt, wobei hier das Federpaket 23 für elastische Anpreßkräfte sorgt. Wegen der hohen in der Gleitfläche 25 wirkenden Kräfte muß verhindert werden, daß der Gegenring 21 gegenüber der Hülse 31 beziehungsweise dem Gehäuse 5 und/oder der Gleitring 19 gegenüber der Antriebswelle 3 durchdreht. Die angesprochenen O-Ringe 29, 33, 35 reichen nicht in allen Fällen aus, die erforderlichen Kräfte aufzubringen. Daher ist vorteilhafterweise vorgesehen, einen Formschluß zwischen der Antriebswelle einerseits und/oder dem feststehenden Gehäuse andererseits vorzusehen und damit eine Kopplungseinrichtung zu realisieren.

In Figur 1 ist eine der Kopplungseinrichtung zugeordnete Mitnehmereinrichtung 53 vorgesehen, die den Gleitring 19 drehfest mit der Antriebswelle 3 koppelt. Bei dem hier dargestellten Ausführungsbeispiel ist die Kopplung nicht unmittelbar mit der Antriebswelle 3 selbst vorgesehen, sondern mit dem starr mit der Antriebswelle 3 gekoppelten Flansch 7. Die Mitnehmereinrichtung 53 weist hierzu mindestens eine, vorzugsweise zwei Zungen 55a und 55b auf, von der hier lediglich die Zunge 55a sichtbar ist. Diese greift in eine geeignete, am Flansch 7 vorgesehene Vertiefung, hier in eine der Bohrungen, nämlich in die Bohrung 11b ein, die den Flansch 7 durchdringt. Damit wird die Mitnehmereinrichtung 53 drehfest über den Flansch 7 mit der Antriebswelle 3 gekoppelt. Die Drehbewegung wird über mindestens einen, vorzugsweise zwei Mitnehmerarme 57a, 57b auf den Gleitring 19 übertragen, von dem hier ein erster Mitnehmerarm 57a dargestellt ist. Dieser greift in eine Vertiefung im Gleitring 19 ein, die hier als Nut 59 ausgebildet ist.

Bereits aus der Darstellung gemäß Figur 1 wird deutlich, daß die Mitnehmereinrichtung 53 aus einem Flachmaterial, vorzugsweise aus einem Blech, herstellbar ist, das in sich federnd ist. Beim Zusammenbau des CO₂-Kompressors 1, insbesondere beim Koppeln der Antriebswelle 3 mit dem Flansch 7, kann die Mitnehmereinrichtung 53 in einer beliebigen Stelle mit dem Flansch 7 in Berührung treten, da die Zunge 55a aus der in Figur 1 dargestellten Position nach links, also in Richtung zur Dichtungseinrichtung 13 zurückgedrängt werden kann. Wird nun die Antriebswelle 3 gegenüber dem Flansch 7 gedreht, greift schließlich die Zunge 55a in die Bohrung 11b ein und schnappt in diese hinein, so daß sie die in Figur 1 dargestellte Position einnimmt.

Um das Einschnappen der Zunge 55a der Mitnehmereinrichtung 53 in der Bohrung 11b zu erleichtern, kann die Außenkontur der Zunge 55a vorzugsweise abgerundet beziehungsweise U-förmig ausgeformt sein. Dies ist aus der Detaildarstellung in Figur 1a ersichtlich, die die in Figur 1 dargestellte Zunge 55a in seitlicher Ansicht wiedergibt, die gemäß Figur 1 einer Unteransicht entspricht. Wesentlich ist, daß die Zunge 55a im übrigen auch so ausgebildet ist, daß sie bei Übertragung eines Drehmoments nicht ungewollt aus der Bohrung 11b herausrutscht.

Die Federwirkung beziehungsweise Vorspannkraft, die auf die Zunge 55a wirkt, wird einerseits durch die Eigenelastizität der Mitnehmereinrichtung 53 bereitgestellt, andererseits aber auch durch die hier als Federpaket 23 ausgebildete Federung, die auch dazu dient, den Gleitring 19 gegen den Gegenring 21 anzupressen, der sich an der Hülse 31 abstützt, die wiederum an einer geeigneten Schulter 61 innerhalb des Gehäuses 5 anliegt. Die Gleitringdichtung wird also zwischen der Schulter 61 und dem Flansch 7 elastisch federnd eingespannt.

Zur Vervollständigung der Kopplungseinrichtung ist der Gegenring 21 gegenüber dem Gehäuse 5 drehfest angeordnet. Die drehfeste Fixierung des Gegenrings 21 am Gehäuse 5 kann, wie unten näher erläutert wird, einerseits durch eine drehfeste Befestigung an der Hülse 31 erfolgen, die im Gehäuse 5 fixiert ist, oder andererseits unmittelbar am Gehäuse 5 selbst.

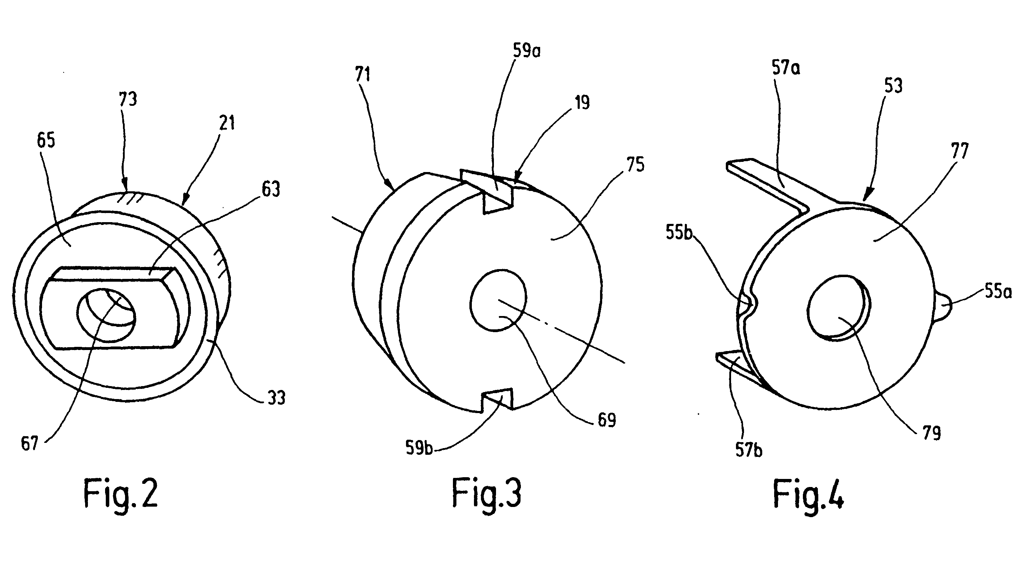

Figur 2 zeigt eine bevorzugte Ausführungsform der drehfesten Kopplung zwischen dem Gegenring 21 und der Hülse 31. Figur 2 zeigt eine perspektivische Ansicht der -in Figur 1- linken Seite des Gegenrings 21, also der Seite, die der Gleitfläche 25 gegenüberliegt.

Bei dem hier wiedergegebenen Ausführungsbeispiel ist der Gegenring 21 mit einem der Kopplungseinrichtung zugeordneten Zweiflach 63 versehen, dessen - in horizontaler Richtung gemessene- Ausdehnung geringer ist als der Durchmesser des Gegenrings 21. Auf seiner oberen und unteren Seite ist der Zweiflach mit einer Abflachung versehen. Der Zweiflach springt gegenüber der Stirnseite 65 des Gegenrings 21 vor und greift in eine entsprechend ausgeformte Vertiefung in der Hülse 31, die auf geeignete, bekannte Weise drehfest im Gehäuse 5 verankert ist.

Figur 2 gibt lediglich eine Prinzipskizze wieder, aus der die Ausgestaltung des Gegenrings 21 ersichtlich ist. Daher stimmen die Maße mit denen gemäß Figur 1 nicht überein.

Der Gegenring 21 weist eine zentrale Öffnung 67 auf, durch die die Antriebswelle 3 hindurchgreift. Die Maße der Öffnung 67 sind so gewählt, daß die hier nicht dargestellte Antriebswelle 3 innerhalb des Gegenrings 21 drehbar ist. In Figur 2 ist noch der zweite O-Ring 33 angedeutet.

Figur 3 zeigt den zweiten Ring der Gleitringdichtung, nämlich den Gleitring 19, der ebenfalls eine zentrale Öffnung 69 aufweist, die von der Antriebswelle 3 durchdrungen wird, die hier allerdings nicht dargestellt ist.

Der hier dargestellte Gleitring 19 ist auf seiner Außenseite mit zwei hier als Nuten 59a und 59b ausgebildeten Ausnehmungen versehen, in die die Mitnehmerarme 57a und 57b der Mitnehmereinrichtung 53 eingreifen, die anhand von Figur 1 erläutert wurden.

Die in Figur 3 linke Stirnseite 71 des Gleitrings 19 bildet mit der in Figur 2 rechten Stirnseite 73 des Gegenrings 21 die als Dichtfläche dienende Gleitfläche 25 aus, die anhand von Figur 1 näher erläutert wurde.

Die rechte Stirnfläche 75 des Gleitrings 19 tritt mit dem anhand von Figur 1 erläuterten Federpaket 23 in Eingriff; sie ist dem Flansch 7 zugewandt, der anhand von Figur 1 erläutert wurde. Sie weist außerdem in Richtung der Mitnehmereinrichtung 53, wie anhand von Figur 1 näher erläutert wurde und die in Figur 4 perspektivisch dargestellt ist. Der bei den Erläuterungen zu Figur 1 angesprochene O-Ring 23 ist hier nicht wiedergegeben.

Die in Figur 4 dargestellte Mitnehmereinrichtung 53 weist einen Grundkörper 77 auf, von dem einerseits die anhand von Figur 1 erläuterten Zungen 55a und 55b ausgehen, andererseits die Mitnehmerarme 57a und 57b. Der Grundkörper 77 weist eine zentrale Öffnung 79 auf, durch die die Antriebswelle 3 hindurchgreift, so daß diese formschlüssig mit dem Flansch 7 verbunden werden kann und ein Drehmoment von der Antriebswelle 3 auf den Flansch 7 übertragbar ist.

Aus der perspektivischen Ansicht gemäß Figur 4 ist ersichtlich, daß die Mitnehmerarme 57a, 57b gegenüber dem Grundkörper 77 um ca. 90° abgewinkelt sind, um in die Nuten 59a, 59b des angrenzenden Gleitrings 19 einzugreifen. Auf der gegenüberliegenden Seite des Grundkörpers 77 befinden sich die Zungen 55a, 55b, die in die Bohrungen 11a, 11b im Flansch 7 eingreifen sollen.

Figur 4 ist eindeutig zu entnehmen, daß die Mitnehmereinrichtung 53 einstückig ausgebildet und aus einem Flachmaterial herstellbar ist. Dabei kann jedes ausreichend feste, möglichst auch noch elastische Material Verwendung finden. Vorzugsweise wird ein Blech eingesetzt (Stahl oder Titan oder dergleichen), das in einem Stanz-Biegeverfahren beziehungsweise Tiefziehverfahren einfach umgeformt werden kann, so daß die Herstellungskosten relativ gering sind.

Für die Grundfunktion der Mitnehmereinrichtung 53 ist es wesentlich, daß diese einerseits drehfest mit der Antriebswelle, beziehungsweise hier mit dem von der Antriebswelle 3 in Rotation versetzten Flansch 7 in Eingriff tritt und andererseits drehfest mit dem Gleitring 19 gekoppelt ist. Es wird deutlich, daß es dabei auf die Anzahl der Mitnehmerarme 57a, 57b beziehungsweise der Zungen 55a, 55b nicht ankommt, ebenfalls auch nicht auf deren Anordnung.

Bei dem in Figur 4 dargestellten Ausführungsbeispiel der Mitnehmereinrichtung 53 sind je zwei Mitnehmerarme 57a, 57b und Zungen 55a, 55b einander gegenüberliegend angeordnet. Sie sind dabei auf einer gedachten Durchmesserlinie positioniert. Diese Durchmesserlinien schneiden sich hier unter einem Winkel von 90°. Bei der Schnittdarstellung in Figur 1 wird nur beispielhaft davon ausgegangen, daß auch einem Mitnehmerarm 57a eine Zunge 11b gegenüberliegend angeordnet ist. Eine derartige Ausgestaltung ist jedoch selbstverständlich ohne weiteres ebenfalls brauchbar. In diesem Falle würde dann dem Mitnehmerarm 57b die Zunge 55b gegenüberliegend angeordnet sein. Für die Grundfunktion der Mitnehmereinrichtung 53 spielt, wie gesagt, die Anordnung der Mitnehmerarme und Zungen keine wesentliche Rolle.

Entscheidend ist jedoch, daß der Grundkörper 77 der Mitnehmereinrichtung 53 in sich federnd ausgebildet ist und damit eine bestimmte Vorspannungskraft auf die Zungen 55a, 55b ausübt. Diese kann jedoch auch oder zusätzlich durch das Federpaket 23 aufgebracht werden, so daß die Zungen 55a und 55b mit einer in Richtung des Flansches 7 wirkenden Vorspannkraft beaufschlagt werden. Durch diese Vorspannkraft ist sichergestellt, daß bei einer Montage zunächst auf die Positionierung der Mitnehmereinrichtung 53 gegenüber dem Flansch 7 beziehungsweise den Bohrungen 11a, 11b nicht geachtet zu werden braucht. Nach dem Aufsetzen des Flansches 7 auf die Stirnseite der Antriebswelle 3 rasten die Zungen 55a, 55b, die zunächst von der linken Seite des Flansches 7 zurückgedrängt werden, schließlich in die Bohrungen 11a, 11b ein und stellen damit die drehfeste Kopplung zwischen dem Flansch 7 und der Mitnehmereinrichtung beziehungsweise dem Gleitring 19 her. Damit ist die Montage wesentlich vereinfacht.

Nach allem wird deutlich, daß die beiden Ringe der Gleitringdichtung mittels der Kopplungseinrichtung drehfest mit dem Gehäuse 5 einerseits beziehungsweise der Antriebswelle 3 andererseits gekoppelt sind, wobei der Gegenring 21 über den Zweiflach 63 und über die Hülse 31 mit dem Gehäuse 5 gekoppelt ist und der Gleitring 19 über der Mitnehmereinrichtung 53 mit dem drehfest mit der Antriebswelle 3 gekoppelten Flansch 7 so verbunden ist, daß ein Schlupf ausgeschlossen ist. Bei einer Relativdrehung der Antriebswelle 3 gegenüber dem Gehäuse 5 ist also eine Verlagerung der Ringe der Gleitringdichtung gegenüber dem Gehäuse 5 beziehungsweise gegenüber der Antriebswelle 3 ausgeschlossen, so daß die zugehörigen O-Ringe 23, 33 und 35 insoweit keinem Verschleiß unterworfen sind. Eine Relativdrehung findet ausschließlich im Bereich der Gleitfläche 25 statt, die durch die Schmiermittelströmung gegen zu großen Verschleiß geschützt ist. Weiterhin sorgt die zweite Lagereinrichtung 47 dafür, daß die Gleitfläche 25 im wesentlichen senkrecht auf der Drehachse 27 steht und daß die rechte Stirnfläche 73 des Gegenrings 21 parallel verläuft zur linken Stirnfläche 71 des Gleitrings 19. Dadurch wird einerseits eine optimale Dichtung des Triebraums 9 beziehungsweise der Schmiermittelströmung gegenüber der Umgebung beziehungsweise dem Entlastungsraum 49 gewährleistet, andererseits der Verschleiß auf ein Minimum reduziert.

Allen anhand der Figuren 1 bis 4 dargestellten Ausführungsbeispielen ist gemeinsam, daß die Schmiermittelströmung von der Gleitfläche 25 aus gesehen nach innen verläuft und durch ein als Fliehkraftpumpe wirkendes, rotierendes Bauteil, hier den Flansch 7 erzeugt wird. Dieser schleudert das im Triebraum 9 vorhandene CO₂-Schmiermittel-Gemisch aufgrund von Fliehkräften und gegebenenfalls auch von Verwirbelungen so nach außen, daß ein Flüssigkeitsring aufgebaut wird, innerhalb dessen ein Überdruck aufgebaut wird. Dieser hängt unter anderem von der Drehzahl des Bauteils und dessen Ausgestaltung sowie von Temperatur und Viskosität des Schmiermittels ab. Er kann beispielsweise 3 mbar bis ca. 200 mbar, vorzugsweise 10 mbar bis 50 mbar betragen.

Die Schmiermittelströmung dient einerseits dazu, im Bereich der Gleitfläche 25 für eine Schmierung zu sorgen, andererseits dazu, diesen Bereich der Dichtungseinrichtung 13 beziehungsweise der Gleitringdichtung zu kühlen. Dabei ist festzustellen, daß bei steigender Drehzahl des CO₂-Kompressors 1 einerseits die Wärmeentwicklung im Bereich der Gleitfläche 25 zunimmt, aber andererseits auch die Stärke der Schmiermittelströmung und damit die Kühlung.

Wesentlicher Vorteil bei dem hier dargestellten CO₂-Kompressor 1 ist, daß die Schmiermittelströmung durch Fliehkraft und Verwirbelung des Flansches erzeugt wird und durch geeignete Bohrungen 12, 15, 43, 45, 11a in das Triebraumzentrum mit "niedrigerem" Druck zurückgeführt wird, und nicht, wie bei bekannten Einrichtungen, allein durch Schwerkraft. Dort nämlich war es von entscheidender Bedeutung, den CO₂-Kompressor in einer bestimmten Montageposition anzubringen, um eine ausreichende Schmierung und Kühlung sicherzustellen. Bei dem hier beschriebenen CO₂-Kompressor 1 ist es möglich, diesen in beliebigen Montagepositionen anzuordnen, da auf jeden Fall die Schmiermittelströmung sichergestellt werden kann, damit also auch die Schmierung und Kühlung.

## Patentansprüche

1. CO₂-Kompressor für eine Klimaanlage eines Kraftfahrzeugs mit einer der Antriebswelle des CO₂-Kompressors zugeordneten, als Gleitring ausgebildeten Dichtungseinrichtung, **gekennzeichnet durch** eine Schmiereinrichtung (15), bei welcher der Dichtungseinrichtung (13) eine **durch** Fliehkräfte bewirkte Schmiermittelströmung zugeführt wird, wobei die Gleitringdichtung einen mit der Antriebswelle (3) rotierenden Gleitring (19) und eine diesem zugeordnete Mitnehmereinrichtung (53) aufweist, die Teil einer Kopplungseinrichtung ist, wobei die Mitnehmereinrichtung (53) eine Federeinrichtung (Federpaket (23)) umfaßt, die wenigstens eine Zunge (55a,55b) der Mitnehmereinrichtung (53) mit einer Vorspannungskraft beaufschlagt.

2. CO₂-Kompressor nach Anspruch 1, **dadurch gekennzeichnet, daß** ein mit dem Schmiermittel zusammenwirkendes, im Betrieb des CO₂-Kompressors (1) rotierbares Bauteil als Fliehkraftpumpe zur Erzeugung der Schmiermittelströmung vorgesehen ist.

3. CO₂-Kompressor nach Anspruch 1 oder 2, **dadurch gekennzeichnet, daß** das Bauteil ein innerhalb des CO₂-Kompressors (1) vorgesehener Flansch (7) ist.

4. CO₂-Kompressor nach einem der vorhergehenden Ansprüche, **dadurch gekennzeichnet, daß** die Mitnehmereinrichtung (53) mit einem von der Antriebswelle (3) des CO₂-Kompressors (1) angetriebenen Bauteil, vorzugweise dem Flansch (7) drehfest gekoppelt ist.

5. CO₂-Kompressor nach einem der vorherigen Ansprüche, **dadurch gekennzeichnet, daß** die Mitnehmereinrichtung (53) mindestens einen mit dem Gleitring (21) zusammenwirkenden Mitnehmerarm (57a,57b) aufweist.

6. CO₂-Kompressor nach einem der vorhergehenden Ansprüche, **dadurch gekennzeichnet, daß** die Mitnehmereinrichtung (53) aus einem Flachmaterial, vorzugsweise aus Blech, herstellbar ist.

7. CO₂-Kompressor nach einem der vorhergehenden Ansprüche, **dadurch gekennzeichnet, daß** die Mitnehmereinrichtung (53) in einem Stanz-Biegeverfahren, insbesondere Tiefziehverfahren, herstellbar ist.

8. CO₂-Kompressor nach einem der vorhergehenden Ansprüche, **dadurch gekennzeichnet, daß** die Mitnehmereinrichtung (53) einstückig ausgebildet ist.

9. CO₂-Kompressor nach einem der vorhergehenden Ansprüche, **dadurch gekennzeichnet, daß** die Dichtungseinrichtung (13) einen feststehenden, mit einem Gehäuseteil (Gehäuse (5)) des CO₂-Kompressors gekoppelten Gegenring (21) und eine die Kopplung bewirkende Kopplungseinrichtung aufweist.

10. CO₂-Kompressor nach Anspruch 9, **dadurch gekennzeichnet, daß** die Kopplungseinrichtung einen Zweiflach (63) und/oder mindestens einen Paßstift (81;81a,81b,81c) umfaßt..

11. CO₂-Kompressor nach einem der vorhergehenden Ansprüche, **dadurch gekennzeichnet, daß** die Dichtungseinrichtung (13) eine als Gehäuse ausgebildete Hülse (31) aufweist.

12. CO₂-Kompressor nach einem der vorhergehenden Ansprüche, **gekennzeichnet durch** eine der Antriebswelle (3) zugeordnete zweite Lagereinrichtung (47), die ein außerhalb der CO₂-Atmosphäre angeordnetes Lager aufweist.

13. CO₂-Kompressor nach Anspruch 12, **dadurch gekennzeichnet, daß** das Lager der zweiten Lagereinrichtung (47) abgedichtet und/oder fettgeschmiert ist.

14. CO₂-Kompressor nach einem der Ansprüche 12 oder 13, **dadurch gekennzeichnet, daß** zwischen der zweiten Lagereinrichtung (47) und der Dichteinrichtung (13) ein Entlastungsraum (49) vorgesehen ist.

15. CO₂-Kompressor nach Anspruch 14, **dadurch gekennzeichnet, daß** der Entlastungsraum (49) einen Entlastungskanal (51) aufweist, der vorzugsweise eine Verbindung zwischen dem Entlastungsraum (49) und der Atmosphäre herstellt.

## Claims

1. CO₂ compressor for an air-conditioning system in a motor vehicle with a sealing device assigned to the drive shaft of the CO₂ compressor and made as a slip-ring, **characterised by** a lubrication device (15) in which the sealing device (13) is supplied with a flow of lubricant created by centrifugal forces, whereby the slip-ring seal has a slip-ring (19) rotating with the drive shaft (3) and a driver device (53) which is part of a coupling device, whereby the driver device (53) includes a spring device (spring package (23)) which acts upon at least one tongue (55a, 55b) of the driver device (53) with a pretensioning force.

2. CO₂ compressor according to Claim 1, **characterised in that** a rotatable component interworking with the lubricant in the operation of the CO₂ compressor (1) is provided as a centrifugal pump to create the flow of lubricant.

3. CO₂ compressor according to Claim 1 or 2, **characterised in that** the component is a flange (7) provided inside the CO₂ compressor (1).

4. CO₂ compressor according to one of the preceding claims, **characterised in that** the driver device (53) is coupled in a torque proof way with a component driven by the drive shaft (3) of the CO₂ compressor (1), preferably the flange (7).

5. CO₂ compressor according to one of the preceding claims, **characterised in that** the driver device (53) has at least one driver arm (57a, 57b) interacting with the slip-ring (21).

6. CO₂ compressor according to one of the preceding claims, **characterised in that** the driver device (53) can be made from a flat material, preferably sheet metal.

7. CO₂ compressor according to one of the preceding claims, **characterised in that** the driver device (53) can be made in a stamping-bending process, especially deep-drawing.

8. CO₂ compressor according to one of the preceding claims, **characterised in that** the driver device (53) is made in one piece.

9. CO₂ compressor according to one of the preceding claims, **characterised in that** the sealing device (13) has a fixed counter-ring (21) coupled with a housing part (housing (5)) of the CO₂ compressor and a coupling device creating the coupling.

10. CO₂ compressor according to Claim 9, **characterised in that** the coupling device includes a dihedron (63) and/or at least one locating pin (81; 81a, 81b, 81c).

11. CO₂ compressor according to one of the preceding claims, **characterised in that** the sealing device (13) has a sleeve (31) made as a housing.

12. CO₂ compressor according to one of the preceding claims, **characterised by** a second bearing device (47) assigned to the drive shaft (3) which has a bearing located outside the CO₂ atmosphere.

13. CO₂ compressor according to Claim 12, **characterised in that** the bearing of the second bearing device (47) is sealed and/or grease-lubricated.

14. CO₂ compressor according to one of Claims 12 or 13, **characterised in that** a release space (49) is provided between the second bearing device (47) and the sealing device (13).

15. CO₂ compressor according to Claim 14, **characterised in that** the release space (49) has a release duct (51) which preferably creates a connection between the release space (49) and the atmosphere.

## Revendications

1. Compresseur au CO₂ pour le climatiseur d'un véhicule motorisé avec un dispositif d'étanchéité constitué en tant que bague de glissement et affecté avec l' arbre d'entraînement du compresseur au CO₂, **caractérisé par** un dispositif de lubrification (15) sur lequel le dispositif d'étanchéité (13) est soumis à un courant de lubrifiant entraîné par forces centrifuges, à l'occasion de quoi le joint à bague de glissement présente une bague de glissement (19) en rotation avec l'arbre d'entraînement (3) et un dispositif d'entraînement (53) y étant affecté, qui fait partie d'un dispositif de couplage, à l'occasion de quoi le dispositif d'entraînement (53) comprend un dispositif à ressorts (paquet de ressorts (23)) qui alimente au moins une languette (55a, 55b) du dispositif d'entraînement (53) avec une force de prétension.

2. Compresseur au CO₂ d'après la revendication 1, **caractérisé en ce qu'un** composant rotatif concourrant avec le lubrifiant dans le service du compresseur au CO₂ (1) est prévu comme pompe à force centrifuge pour la production du flux de lubrifiant.

3. Compresseur au CO₂ d'après la revendication 1 ou 2, **caractérisé en ce que** le composant est une flasque (7) prévu au sein du compresseur au CO₂ (1).

4. Compresseur au CO₂ d'après l'une des revendications précédentes, **caractérisé en ce que** le dispositif d'entraînement (53) est couplé de manière résistante à la torsion avec l'un des composants entraînés par l'arbre d'entraînement (3) du compresseur au CO₂ (1), de préférence avec le patin (7).

5. Compresseur au CO₂ d'après l'une des revendications précédentes, **caractérisé en ce que** le dispositif d'entraînement (53) présente au moins un bras d'entraînement (57a, 57b) concourrant avec la bague de glissement (21).

6. Compresseur au CO₂ d'après l'une des revendications précédentes, **caractérisé en ce que** le dispositif d'entraînement (53) est fabricable en matériau plat, de préférence en tôle.

7. Compresseur au CO₂ d'après l'une des revendications précédentes, **caractérisé en ce que** le dispositif d'entraînement (53) est fabricable au cours d'un procédé de flexion par estampage, notamment d'un procédé d'emboutissage profond.

8. Compresseur au CO₂ d'après l'une des revendications précédentes, **caractérisé en ce que** le dispositif d'entraînement (53) est composé d'une seule pièce.

9. Compresseur au CO₂ d'après l'une des revendications précédentes, **caractérisé en ce que** le dispositif d'étanchéité (13) présente une contre-bague (21) fixe, couplée avec une pièce du boîtier (boîtier (5)) du compresseur au CO₂ et un dispositif de couplage induisant le couplage.

10. Compresseur au CO₂ d'après la revendication 9, **caractérisé en ce que** le dispositif de couplage comprend un corps cylindrique à deux plats opposés (63) et/ou au moins une goupille de serrage (81 ; 81a ; 81b ; 81c).

11. Compresseur au CO₂ d'après l'une des revendications précédentes, **caractérisé en ce que** le dispositif d'étanchéité (13) présente un manchon constitué comme boîtier (31).

12. Compresseur au CO₂ d'après l'une des revendications précédentes, **caractérisé par** un deuxième dispositif de paliers (47) affecté à l'arbre d'entraînement (3), qui présente un palier disposé en-dehors de l'atmosphère de CO₂.

13. Compresseur au CO₂ d'après la revendication 12, **caractérisé en ce que** le palier du deuxième dispositif de paliers (47) est étanchéifié et/ou lubrifié à la graisse.

14. Compresseur au CO₂ d'après l'une des revendications 12 ou 13, **caractérisé en ce qu'une** chambre de décharge (49) est prévue entre le deuxième dispositif de paliers (47) et le dispositif d'étanchéité (13).

15. Compresseur au CO₂ d'après la revendication 14, **caractérisé en ce que** le dispositif de décharge (49) présente un canal de décharge (51) qui établit une liaison de préférence entre la chambre de décharge (49) et l'atmosphère.
